# EUROPEAN PATENT SPECIFICATION

(11) **EP 0 394 313 B1**
(45) Date of publication and mention of the grant of the patent: **06.04.1994**
(21) Application number: 89900477.4
(22) Date of filing: 07.11.1988
(51) Int. Cl.: G06F 11/14, H04Q 7/02, G08B 5/22

(54) **PAGING TERMINAL APPARATUS WITH MESSAGE STORAGE AND RETRANSMISSION CAPABILITY AND METHOD THEREFOR**
ZENTRALEINHEIT FUER RUFANLAGE MIT DER FÄHIGKEIT ZUR NACHRICHTENSPEICHERUNG UND -WIEDERÜBERTRAGUNG UND VERFAHREN DAFÜR
TERMINAL D' APPEL CAPABLE DE STOCKER ET DE RETRANSMETTRE DES MESSAGES, ET PROCEDE PREVU A CET EFFET

(30) Priority: 16.11.1987 US 121362
(43) Date of publication of application: 31.10.1990
(73) Proprietor: MOTOROLA, INC., Schaumburg, IL 60196 (US)
(72) Inventor: LEONARDO, Victoria, A., Lantana, FL 33462 (US); NELSON, Leonard, E., Boynton Beach, FL 33435 (US)
(74) Representative: Dunlop, Hugh Christopher
(86) International application number: US8803970
(87) International publication number: WO8905009

(56) References cited:
- WO-A-84/00651
- US-A- 4 247 908

## Description

### Background of the Invention

This invention relates in general to paging systems and, more particularly, to paging terminal apparatus, operable with paging receivers with acknowledge back capability, to store and retransmit messages for pagers initially failing to acknowledge back within a predetermined time period.

Without more, most paging systems experience a loss of page messages under a number of adverse operating conditions. This may be because the pager wearer is out of effective signal range or, perhaps, has taken himself or herself out of service, accidentally or intentionally, by turning off the pager itself. Interference and other adverse signal conditions are still other relevant factors in this regard.

Obviously, what is needed is some method and apparatus capable of preventing the paging messages from being lost. There are, of course, communications systems known in the art which address problems of this nature regarding undeliverable messages to called persons. Telephone answering answering apparatus is but one group of devices intended to preserve, i.e., store messages for later play back. However, such devices require storage at the receiving parties location and would not be amenable to conventional paging systems. Moreover, it requires specific acts and procedures of the called party to retrieve such messages. Other devices or technologies, such as voice mail services and computer mailboxes, are known but exhibit similar or still other disadvantages.

There is one paging product presently known in the art which addresses the problem of uncompleted calls as intended for particular system pagers. It is directed to an arrangement wherein pages are transmitted periodically until a specified telephone number is called by the particular paged party. However, it will be readily appreciated that this nevertheless requires a definitive act by the pager user to terminate this periodic retransmission of the message. If such user feels it is an unwarranted inconvenience, or for whatever reason, the paging message is needlessly retransmitted using valuable system capacity.

Since most paging users are relatively unsophisticated in electrical/electronic technology and pager operations, what is needed is an arrangement to effect the processing and delivery of paging messages automatically, including the storage and retransmission of messages which cannot be properly delivered to a pager at that particular time, all without any action on the pager user himself or herself being required.

US-A-4,247,908 assigned to Motorola Inc. describes a two-way communications system in which a control unit interfaces directly with a host computer and also interfaces with portable units via a radio link. Portable units which have not shown any activity for a period of time are tagged as being inactive. Units are polled in a polling sequence in which inactive units are polled less frequently than active units.

### Summary of the Invention

According to the present invention, a method for storing and subsequently transmitting messages intended for pagers is provided as defined in claim 1 and a controller for use with pagers having acknowledge back capability is provided as defined in claim 6.

Accordingly the invention provides improved assurance in delivering messages to their destinations in a paging system. Storage and retransmission of messages is provided on a fully automated basis without further action of the paging user being required.

In practicing the invention, paging terminal apparatus is provided for use with paging receivers having an acknowledge back capability, wherein transmitted but unacknowledged addresses cause messages intended therefore to be stored for later retransmission. The disclosed terminal apparatus includes a paging controller and a transceiver for transmission of pager addresses to the various system receivers followed by a transmission of the intended messages for those pagers acknowledging back such addresses as received and recognized. The controller further includes a provision for storing all intended messages for particular paging receivers for later retransmission where these pagers initially failed to send back an appropriate acknowledgment of its transmitted address. The controller includes a provision for periodically retransmitting the address of the pagers which initially failed to acknowledge its transmitted address and then, further, transmitting stored messages intended therefore upon the controller receiving back an appropriate acknowledgment in response to address retransmission.

### Brief Description of the Drawings

The features of the present invention which are believed to be novel are set forth with particularity in the appended claims. The invention, itself, together with further objects and advantage thereof, may best be understood by reference to the accompanying drawings, in which:
Figure 1 is a block diagram of a radio communication system in which the present invention may be advantageously utilized;
Figure 2 is a block diagram of a paging terminal and associated apparatus used to send addresses and messages to the system pagers and which include the storage capability provided by the present invention;
Figure 3 is a block diagram of a paging receiver with acknowledge back capability intended for operation in the disclosed communication system;
Figure 4 is a flow chart which describes the operation of the paging receiver of Figure 3;
Figure 5 is a graphic representation of the timing diagram showing the relation between the "out-bound" pages of the paging terminal and the "in-bound" acknowledgments of the various system pagers; and
Figure 6 is a flow diagram that describes the operation of the paging terminal including the handling, storage and retransmission of paging messages in accordance with the present invention.

### Brief Description of the Preferred Embodiment

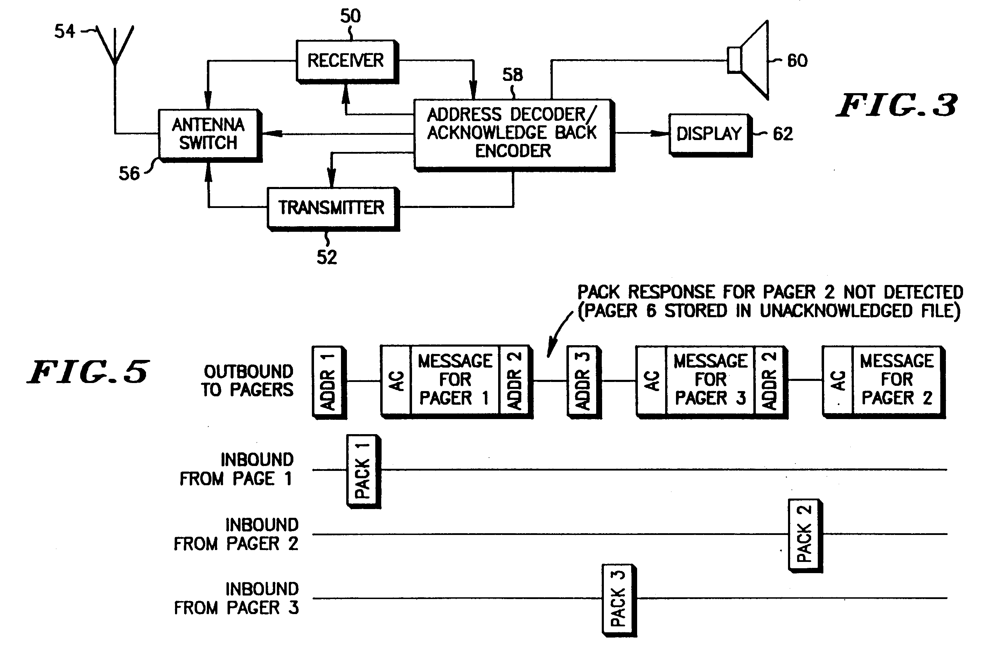

Referring now to the drawings, a radio communications paging system 10 is shown in which the present invention may be advantageously utilized. The paging system includes terminal apparatus, shown generally at reference 20, and a plurality of paging receivers indicated at 12 as illustrated. It is intended that the associated paging receivers be capable of and provide an acknowledge back feature upon receiving and recognizing its transmitted address. Pagers of this character are, of course, known to those skilled in the art and include an acknowledge back encoder 14 as indicated which is activated when the paging receiver 12 receives and recognizes its particular address. A more detailed description will be set forth in connection with Figure 3 for the pager function and operation.

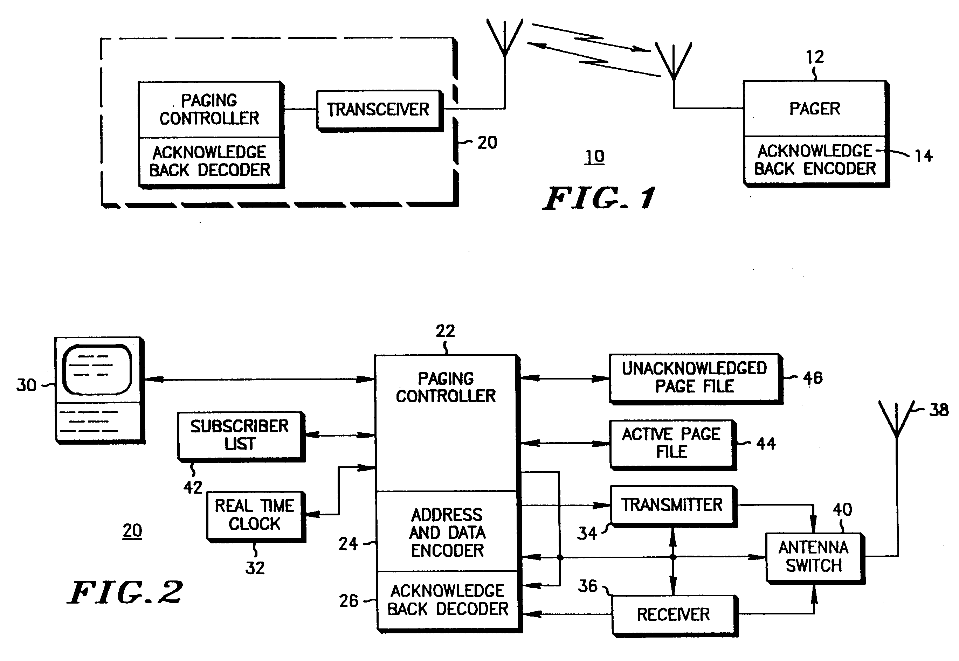

The terminal apparatus 20 of Figure 1 is illustrated in greater detail in Figure 2 together with the associated auxiliary equipment and the paging files intended to be generated to effect the advantages of the present invention. As therein shown, terminal apparatus 20 includes a paging controller 22 which, inter alia, also includes an address and data encoder 24 and an acknowledge back decoder 26. Associated with the paging controller is an entry device 30, a real time clock 32 as well as a transmitter 34 and receiver 36 operating in connection with an antenna 38 and an antenna switch 40.

Entry device 30 is used to access the paging controller 22 to enter pager ID's (identification numbers) and messages intended therefor for subsequent transmission. The entry device 30 as shown is a video display terminal which is useful for entering alpha numeric messages, and for accessing and updating a subscriber list 42. Subscriber list 42 is a list of all the pagers ID's that are valid in the system 10. Filed under each pager ID in the subscriber list 42 are several items that will be needed by the paging controller 22 to send, or transmit, a page including such information as pager type (acknowledge back or non-acknowledge back), the particular pager address which corresponds to the pager ID, the maximum message storage time of unacknowledged pages, and how often delivery attempts should be made.

As may be appreciated, paging controller 22 is the essential heart of the system 10 and controls the operation of the other associated elements of the paging terminal apparatus. In addition to the subscriber list maintained by controller 22, an active page file 44 is also maintained and comprises a temporary file containing information about the pages being processed by the terminal apparatus 20. The active page file 44 includes the pager identification or ID address, message, and time. Further, an unacknowledged page file 46 is likewise maintained in which undelivered messages are stored. The unacknowledged page file includes the pager ID, the pager address, the message itself, the time of last transmission, and time of entry into the unacknowledged page file. The real time clock 32 is used to supply timing information to the paging controller and for time stamping of undelivered messages in the unacknowledged page file 46.

The address and data encoder 24 accepts addresses and messages supplied to the paging controller 22 by the entry device 30. Address and data encoder 22 then converts this supplied information to the actual transmitted bit patterns in a manner well understood by those skilled in the art. These bit patterns are subsequently transmitted by transmitter 34 through antenna switch 40 and to antenna 38 which radiates the signal energy to the system pagers 12. The "Ack-Back" decoder 26 then detects and processes any acknowledgments returned by the system pagers 12 and provides this information to the paging controller 22. While transmitter 34 modulates an RF carrier frequency with outbound addresses and messages, the receiver 36 demodulates the in-bound modulated RF carrier frequency and supplies recovered data to decoder 26. Upon transmitting an address to a particular pager 12, and then receiving back an acknowledgment therefrom, paging controller 22 immediately transmits the intended message therefor. If an address for a particular paging receiver 12 is transmitted and an acknowledgment back is not received, the message intended for that particular receiver 12 is then stored into the unacknowledged page file 46 for later retransmission on a periodic basis. Such retransmission of that address continues on a periodic basis until an acknowledge back is in fact received at which time the retained message therefor is then sent, or a predetermined time period expires, at which time the information in the unacknowledged page file 46 is purged.

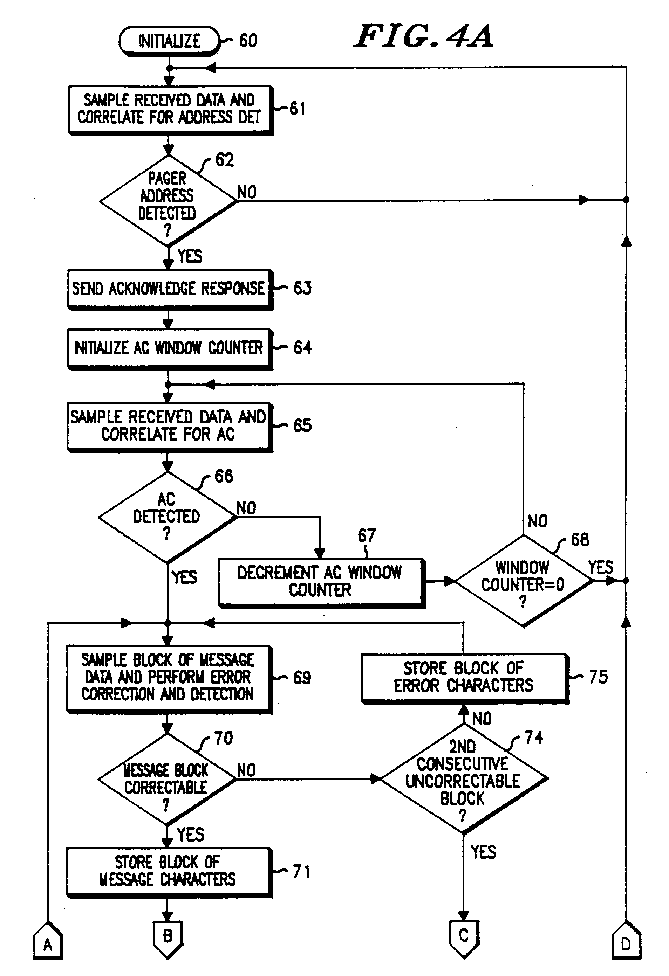

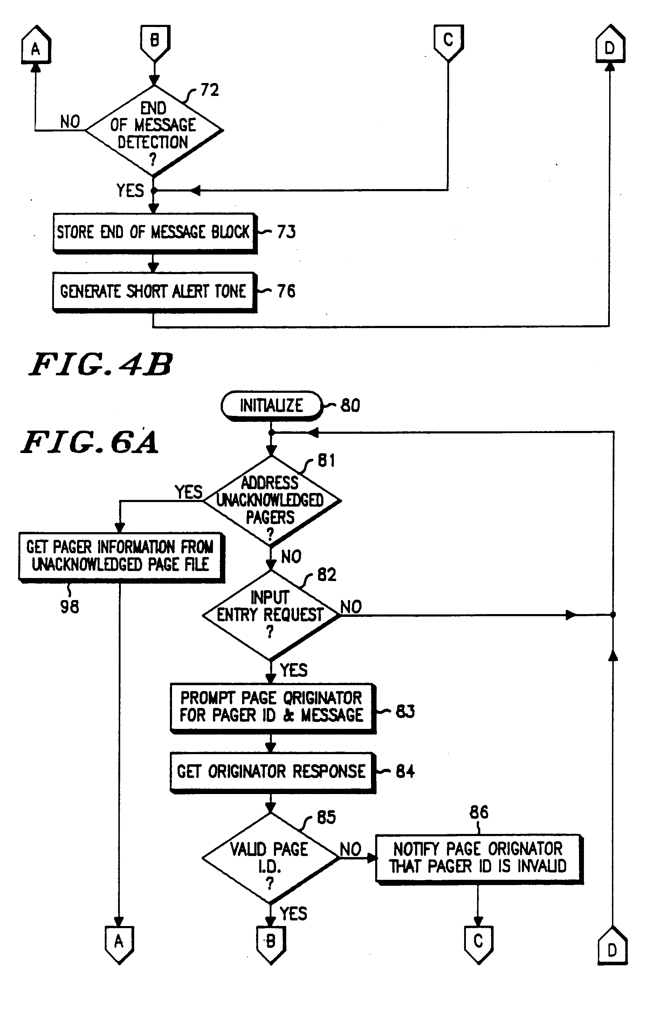

The block diagram of the paging receiver 12 is shown in Figure 3 and a flow diagram that describes his operation is illustrated in Figure 4. The pager 12 with acknowledge back capability (hereinafter "Ack-Back"), as illustrated, consists of an RF section 50 and a transmitter section 52. RF signals are coupled to and from the receiver and transmitter sections 50/52 via an antenna 54 and antenna switch 56. Normally, ACK-BACK pager 12 is operated in the receive mode, and the demodulated data output of the pager receiver section 50 is coupled to an included paging address decoder 58.

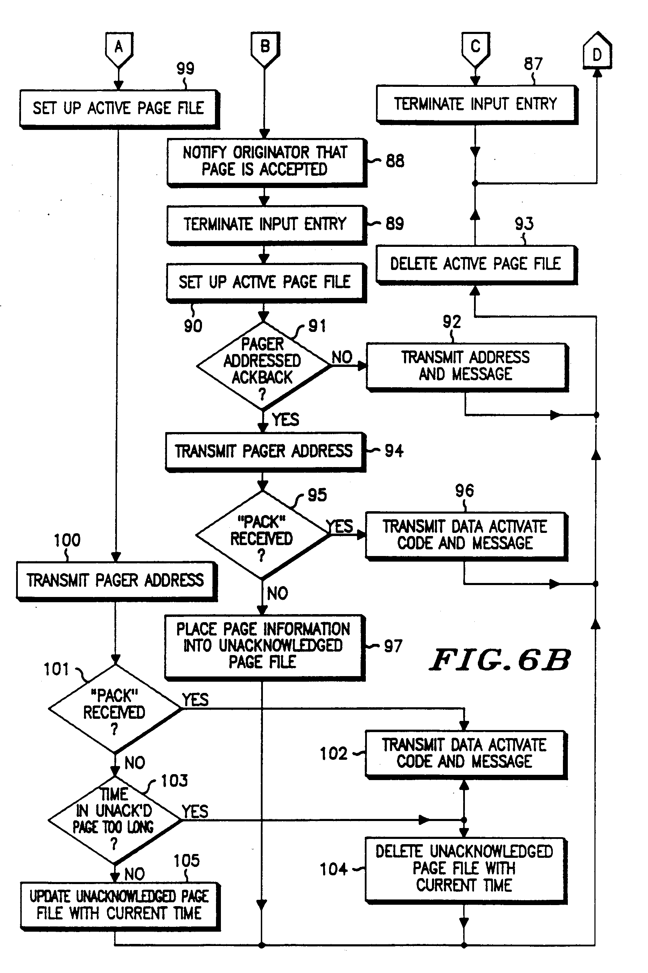

Paging address decoder 58 examines the recovered data looking for a unique selective calling signal or address that is assigned to pager 12, as illustrated in steps 61 and 62 of the pager flow diagram shown in Figure 4. This unique address is a precursor for any alphanumeric or voice messages that may be directed to the pager. Once the address has been detected at step 62, the paging address decoder 58 at step 63 generates an appropriate pager automated acknowledge back response (hereinafter "PACK") consisting of particular coded words, which then keys the transmitter 52 which is modulated with the PACK response signal, and the output signal from antenna 54 is transmitted to and is received by the paging controller 22. Following the PACK response, pager 12 returns to its normal receive mode and looks for an activation code (see AC in Figure 5). However, before beginning to search for this activation code, a window counter (not specifically shown) is decremented at step 67, and at step 68, the count is compared to zero. If the count has decremented to zero, pager returns to the address decode state. If the count has not decremented to zero, the paging decoder 58 continues to look for the activation code detect. The activation code is used to resynchronize the pager for data message decoding.

The message decoding itself is performed in program flow steps 69 through 75 in the conventional manner understood by those skilled in the art and is deemed unnecessary to be described in further detail at this point for that reason and further because it is not critical to an understanding of the present invention. Once, however, a complete message or decodable portion of a message has been received, the paging decoder 58 generates an alert tone and routes this alert tone to the receiver transducer 60. The paging decoder 58 also stores the message in memory (not specifically shown) so that a pager wearer can recall these messages later for viewing on display 62 in the usual manner.

The timing diagram of Figure 5 illustrates the relationship between the "outbound" signals transmitted from paging terminal apparatus 20 to the various system pagers 12, and the "inbound" signals from the pagers 12 acknowledging back to the terminal apparatus (the PACK responses). By way of example, in Figure 5, pager "No. 1" immediately acknowledges back after receiving its address following which such response is detected by the terminal apparatus and the message intended for that pager may then be transmitted by the terminal. In contrast, pager "No. 2" for some reason does not send back an acknowledgment and, consequently, paging terminal apparatus 22 does not send the message intended for pager "No. 2", but instead stores it in the unacknowledged page file 46. Subsequently, after a message has been successfully sent to pager "No. 3", another attempt is made to address pager "No. 2" which initially failed to acknowledge back. This time, the attempt is indicated as successful, whereupon the message intended for pager "No. 2" is sent by terminal apparatus and the page is then deleted from the unacknowledged page file 46.

The means and the procedure for effecting the signalling procedure and sequence in terms of sending or storing messages, as illustrated and described in Figure 5, are effected within, and by means of, the paging controller 22 of terminal apparatus 20, as previously described. The procedure/protocol for accomplishing this is set forth with particularity in the flow diagram comprising Figures 6a and 6b. The operation begins with an initialize step 80, normally needed only at power up. Step 80 is used to perform functions such as setting up the I/O ports as inputs and outputs clearing certain memory locations, and perhaps running a self test. After completing the initial power up routine, the controller 22 looks into the unacknowledged page file 46 to determine if it is time to attempt to deliver (retransmit) any unacknowledged pages. If there are either no pages in the unacknowledged page file 46, or there are no pages requiring attention at this time, the program advances to step 82 wherein controller 22 checks to see if any input devices are requesting service. If no input devices are requesting service, the controller returns to step 81. This program flow (step 81 to step 82 to step 81) continues until either there is an input service request (a new page originator needing service), or an unacknowledged page that requires attention.

Upon detecting an input service request at step 82, the paging controller 22 prompts the page originator at step 83 for a pager ID and message which may be entered by way of entry device 30, and then hitting a designated key (such as enter) on device 30. Paging controller 22 then reads the originators response at step 84 and looks for a matching pager ID in the subscriber list 42 at step 85. If there is no matching ID, the controller 22 sends a message to entry device 30 at step 86 notifying the originator that the pager ID entered is invalid and the input session is terminated at step 87, whereupon paging controller 22 is returned to step 81 as illustrated. If a matching ID is found at step 85, a message is sent to entry device 30 at step 88 notifying the page originator that the page has in fact been accepted, and the input session may be terminated at 89.

Once the page has been accepted by controller 22, it then sets up active page file 44 at step 90 which contains the pagers ID, the address to which the page will be sent, the message attached to the page, and the current time and date. The address corresponding to a particular pagers ID is located in subscriber list 46. A pager's address and ID may be identical, but generally they are not. Typically a pager has a three-digit pager ID but an address is perhaps six or seven digits in length. The time, of course, is obtained from real time clock 32.

Next, the controller 22 consults subscriber list 46 at step 91 to determine if the pager being addressed is capable of an acknowledge back feature. If the pager being addressed is not one capable of such, the page is sent immediately at step 92, whereupon the active page file entry is deleted at step 93, and paging controller 22 is returned to step 81 in the flow diagram, as illustrated.

If the pager being addressed is capable of acknowledging back, the address is transmitted at step 94 and the paging controller 22 looks for this (PACK) response at step 95. In performing the operations indicated at steps 92 and 94, paging controller 22 may, for example, send information in the form of ASCII characters to the address and data encoder 24 where it is converted to the required binary digits and parity information is added before being applied to transmitter 34 for transmission.

To perform step 95, pager controller 22 turns transmitter 34 off, enables receiver 36, connects antenna 38 to receiver 36 via antenna switch 40 and enables ACK-BACK decoder 26 for a brief window. If the pager address is acknowledged, indicated at step 95, an activation code is sent at step 96 followed by the particular message. As mentioned previously, the activation code is used to resynchronize pager 30 to the data or voice message that follows. Following the successful transmission of the referenced message, active page file 44 will then be purged at step 93, and the pager controller 22 will be returned to step 81 in the flow diagram as illustrated.

If the PACK response is not detected at step 95, the page will then be placed in the unacknowledged page file 46 indicated at step 97. Basically, the contents of the active page file will be placed into the unacknowledged page file with an added piece of information, i.e., the time of the last transmission. Accordingly, pages in the unacknowledged page file 46 will have two pieces of time information associated with them: (1) the time of the initial transmission attempt and (2) the time of the latest transmission attempt. Obviously, after the first transmission attempt, the two pieces of time information will in fact be the same. Following the establishment of the unacknowledged page file indicated at step 97, the program flow again returns to step 81 through step 93 where the active page file 44 is purged of now obsolete and unneeded information.

When attempting to send a previously unacknowledged page as determined at step 81, the paging control of program flow proceeds along the left branch of the flow chart of Figures 6a and 6b. At step 98, the page information is retrieved from the unacknowledged page file 46 and, at step 99, the active page file is set up. After setting up an active page file for the, unacknowledged page, the particular pagers address is retransmitted at step 100, and the paging controller 22 looks for the PACK response at step 101. If the PACK response is in fact detected, the activation code and message will be transmitted at step 102. Further, following the successful transmission of a message, the page will then be deleted from the unacknowledged page file at step 104 as no longer being needed, and the paging controller 22 will then be returned to step 81 through step 93.

On the other hand, if the PACK response is not received at step 101, the paging controller 22 checks on how long the page has been stored in the unacknowledged page file 46 to determine if the time elapsed has exceeded a set predetermined storage time. If the storage time has been exceeded, the page is then deleted from the unacknowledged page file 46 at step 104, and the paging controller 22 will also then be returned to step 81 through step 93.

If the allocated storage time has not been exceeded, the unacknowledged page file 46 will be updated with the latest transmission time, and the paging controller will be returned to step 81 through step 93.

In this manner, then, a procedure is established whereby the normal paging operations proceeds in the manner well known in prior systems. However, for those pages which are initially unacknowledged, the messages intended therefor will be stored within the paging apparatus 20 for later retransmission, assuming a successful acknowledge back at that time. Periodic attempts will continue to effect a successful completion of a paging sequence within some set predetermined time after which the attempts cease and the information simply deleted from the storage location. It is to be emphasized that such retransmission attempts at reaching an initially unacknowledging pager is effected automatically and without any further action required by the pager user at any time. In this way an entirely new and added dimension is provided for paging systems to effectively and efficiently prevent messages from being lost, by retaining and later retransmitting them, requiring no further action on the part of the pager user himself.

## Claims

1. A method for storing and subsequently transmitting messages intended for pagers (12) having the capability to acknowledge back receipt of an address identifying the pager (12), but which fail to effect such acknowledge back upon the initial transmission of its address, said method being characterized by:
establishing an active page file (44) into which the addresses of pagers (12) to be called are placed, along with the messages intended therefor;
retrieving pager addresses from the active page file (44);
initially sending the pager addresses retrieved to the pagers (12);
establishing a predetermined time period with a clock (32) during which acknowledge back responses from the pagers (12) being called are to be received;
retrieving messages from the active page file (44) for those pagers sending acknowledge back responses within the predetermined time period;
sending the message retrieved to the intended pagers (12);
establishing an unacknowledged page file (46);
storing, within the unacknowledged page file (46) for subsequent transmission at a later time, the addresses and messages corresponding thereto for the called pagers (12) which fail to acknowledge back the initial address transmissions within the predetermined time period;
periodically retrieving from the unacknowledged page file (46) the pager addresses of called pagers (12) initially failing to acknowledge back;
retransmitting the pager addresses retrieved; and
retrieving and transmitting the stored messages to each called pager (12) initially failing to acknowledge back and that subsequently acknowledge back regarding its retransmitted address.

2. The method for storing and transmitting messages for pagers initially failing to acknowledge back address reception in accordance with claim 1, wherein the clock (32) is a real time clock, and wherein said method further comprises the steps of:
establishing a second predetermined time period with the real time clock (32);
continuing to retransmit the addresses of pagers initially failing to acknowledge back until the acknowledgement of such transmission is received back therefor, or the second predetermined time period expires.

3. The method for storing and transmitting messages for pagers initially failing to acknowledge back address reception in accordance with claim 2, wherein the step of storing includes the further step of storing a particular pager ID, its address and both the time of the initial transmission and the time of the last transmission, if any, in the unacknowledged page file (46).

4. The method for storing and transmitting messages for pagers initially failing to acknowledge back address reception in accordance with claim 3, wherein the time of initial and last transmissions are read in from the real time clock (32).

5. The method for storing and transmitting messages for pagers initially failing to acknowledge back address reception in accordance with any one of claims 1 to 4, wherein the sending of addresses and messages to the pagers includes the further step of storing the particular pager ID's, and times of placing in the active page file (44).

6. A controller for use with receivers with acknowledge back capability, the controller being characterized by:
active page storage means (44) into which the addresses of pagers (12) to be called are placed, along with the messages intended therefor;
means for retrieving pager addresses from the active page storage means (44);
transmission means for initially sending the pager addresses retrieved to the pagers (12);
a clock (32) arranged to establish a predetermined time period during which acknowledge back responses from the pagers (12) being called are to be received;
means for retrieving messages from the active page storage means (44) for those pagers sending acknowledge back responses within the predetermined time period;
transmission means for sending the message retrieved to the intended pagers (12);
unacknowledged page storage means (46);
means for storing, within the unacknowledged page storage means (46), for subsequent transmission at a later time, the addresses and messages corresponding thereto for the called pagers (12) which fail to acknowledge back the initial address transmissions within the predetermined time period;
means for periodically retrieving from the unacknowledged page storage means (46) the pager addresses of called pagers (12) initially failing to acknowledge back;
means for retransmitting the pager addresses retrieved and for retrieving and transmitting the stored messages to each called pager (12) initially failing to acknowledge back and that subsequently acknowledge back regarding its retransmitted address.

7. The controller of claim 6, wherein the clock (32) is a real time clock, and further comprising:
means for establishing a second predetermined time period with the real time clock (32);
means for continuing to retransmit the addresses of pagers initially failing to acknowledge back until the acknowledgement of such transmission is received back therefor, or the second predetermined time period expires.

8. The controller of claim 7, wherein the unacknowledge page storage means (46) include means for storing a particular pager ID, its address and both the time of the initial transmission and the time of the last transmission, if any.

9. The controller of claim 8, comprising means for reading the time of initial and last transmissions from the real time clock (32).

10. The controller of any one of claims 6 to 9, comprising means for storing the particular pager ID's, and times of placing in the active page file (44).

## Patentansprüche

1. Verfahren zum Speichern und nachfolgendem Übertragen von Nachrichten, die für Rufgeräte (12) mit der Fähigkeit zur Rückbestätigung des Empfangs einer das Rufgerät (12) identifizierenden Adresse bestimmt sind, die aber versäumen, eine solche Rückbestätigung nach der ursprünglichen Übertragung ihrer Adresse zu vollziehen, wobei das Verfahren gekennzeichnet ist durch:
Einrichten einer Datei für aktive Rufe (44), in die die Adressen von zu rufenden Rufgeräten (12) zusammen mit den dafür bestimmten Nachrichten eingetragen werden;
Wiedergewinnen der Rufgeräteadressen von der Datei für aktive Rufe (44);
anfängliches Senden der wiedergewonnenen Rufgeräteadressen an die Rufgeräte (12);
Festsetzen einer vorbestimmten Zeitdauer mit einer Uhr (32), während der Rückbestätigungsantworten von den gerade gerufenen Rufgeräten (12) zu empfangen sind;
Wiedergewinnen der Nachrichten aus der Datei dür aktive Rufe (44) für diejenigen Rufgeräte, die Rückbestätigungsantworten innerhalb der vorbestimmten Zeitdauer senden;
Senden der wiedergewonnenen Nachricht an die geplanten Rufgeräte (12);
Einrichten einer Datei für unbestätigte Rufe (46);
Speichern der Adressen und der entsprechenden Nachrichten dazu für die gerufenen Rufgeräte (12), die versäumen, die ursprünglichen Adreßübertragungen innerhalb der vorbestimmten Zeitdauer zu bestätigen, in der Datei für unbestätigte Rufe (46) zur nachfolgenden Übertragung zu einer späteren Zeit;
periodisches Wiedergewinnen der Rufgeräteadressen der anfangs nicht bestätigenden gerufenen Rufgeräte (12) von der Datei für unbestätigte Rufe (46);
Wiederübertragen der wiedergewonnenen Rufgeräteadressen, und
Wiedergewinnen und Übertragen der gespeicherten Nachrichten an jedes gerufene Rufgerät (12), das anfangs versäumt rückzubestätigen, und das nachfolgend in Anbetracht seiner wiederübertragenen Adresse rückbestätigt.

2. Verfahren zum Speichern und nachfolgendem Übertragen von Nachrichten für Rufgeräte, die anfangs versäumen, den Empfang der Adresse zu bestätigen, nach Anspruch 1, bei dem die Uhr (32) eine Echtzeituhr ist und bei dem dieses Verfahren weiter die Schritte umfaßt:
Festsetzen einer zweiten vorbestimmten Zeitdauer mit der Echtzeituhr (32);
Fortsetzen der Wiederübertragung der Adressen von anfangs nicht bestätigenden Rufgeräten, bis die Bestätigung einer solchen Übertragung dafür rückempfangen wird oder bis die zweite vorbestimmte Zeitdauer abläuft.

3. Verfahren zum Speichern und nachfolgendem Übertragen von Nachrichten für Rufgeräte, die anfangs versäumen, den Empfang der Adresse zu bestätigen, nach Anspruch 2, bei dem der Schritt des Speicherns weiter den Schritt des Speicherns einer einzelnen Rufgeräte-ID, seiner Adresse und sowohl der Zeit der ursprünglichen Übertragung als auch der Zeit der letzten Übertragung, wenn überhaupt eine, in der Datei für unbestätigte Rufe (46) umfaßt.

4. Verfahren zum Speichern und nachfolgendem Übertragen von Nachrichten für Rufgeräte, die anfangs versäumen, den Empfang der Adresse zu bestätigen, nach Anspruch 3, bei dem die Zeit der ursprünglichen Übertragung und der letzten Übertragung von der Echtzeituhr (32) abgelesen wird.

5. Verfahren zum Speichern und nachfolgendem Übertragen von Nachrichten für Rufgeräte, die anfangs versäumen, den Empfang der Adresse zu bestätigen, nach einem der Ansprüche 1 bis 4, bei dem das Senden von Adressen und Nachrichten an die Rufgeräte weiter den Schritt des Speicherns der einzelnen Rufgeräte-IDs und der Zeiten der Eintragung in die Datei für aktive Rufe (44) umfaßt.

6. Steuereinheit zur Verwendung mit Empfängern mit der Fähigkeit zur Rückbestätigung, wobei die Steuereinheit gekennzeichnet ist durch:
eine Speichereinrichtung für aktive Rufe (44), in die die Adressen von zu rufenden Rufgeräten (12) zusammen mit den dafür bestimmten Nachrichten eingetragen werden;
eine Einrichtung zum Wiedergewinnen der Rufgeräteadressen von der Speichereinrichtung für aktive Rufe (44);
eine Übertragungseinrichtung zum anfänglichen Senden der wiedergewonnenen Rufgeräteadressen an die Rufgeräte (12);
eine Uhr (32), eingerichtet zum Festsetzen einer vorbestimmten Zeitdauer, während der Rückbestätigungsantworten von den gerade gerufenen Rufgeräten (12) zu empfangen sind;
eine Einrichtung zum Wiedergewinnen der Nachrichten aus der Speichereinrichtung für aktive Rufe (44) für diejenigen Rufgeräte, die Rückbestätigungsantworten innerhalb der vorbestimmten Zeitdauer senden;
eine Übertragungseinrichtung zum Senden der wiedergewonnenen Nachricht an die geplanten Rufgeräte (12);
eine Speichereinrichtung für unbestätigte Rufe (46);
eine Einrichtung zum Speichern der Adressen und der entsprechenden Nachrichten dazu für die gerufenen Rufgeräte (12), die versäumen, die ursprünglichen Adreßübertragungen innerhalb der vorbestimmten Zeitdauer zu bestätigen, in der Speichereinrichtung für unbestätigte Rufe (46) zur nachfolgenden Übertragung zu einer späteren Zeit;
eine Einrichtung zum periodischen Wiedergewinnen der Rufgeräteadressen der anfangs nicht bestätigenden gerufenen Rufgeräte (12) von der Speichereinrichtung für unbestätigte Rufe (46);
eine Einrichtung zum Wiederübertragen der wiedergewonnenen Rufgeräteadressen und zum Wiedergewinnen und Übertragen der gespeicherten Nachrichten an jedes gerufene Rufgerät (12), das anfangs versäumt, rückzubestätigen, und das nachfolgend in Anbetracht seiner wiederübertragenen Adresse rückbestätigt.

7. Steuereinheit nach Anspruch 6, bei der die Uhr (32) eine Echtzeituhr ist, und weiter umfassend:
eine Einrichtung zum Festsetzen einer zweiten vorbestimmten Zeitdauer mit der Echtzeituhr (32);
eine Einrichtung zum Fortsetzen der Wiederübertragung der Adressen von anfangs nicht bestätigenden Rufgeräten, bis die Bestätigung einer solchen Übertragung dafür rückempfangen wird oder bis die zweite vorbestimmte Zeitdauer abläuft.

8. Steuereinheit nach Anspruch 7, bei der die Speichereinrichtung für unbestätigte Rufe (46) eine Einrichtung zum Speichern einer einzelnen Rufgeräte-ID, seiner Adresse und sowohl der Zeit der ursprünglichen Übertragung als auch der Zeit der letzten Übertragung, wenn überhaupt eine, umfaßt.

9. Steuereinheit nach Anspruch 8, umfassend eine Einrichtung zum Ablesen der Zeit der ursprünglichen Übertragung und der letzten Übertragung von der Echtzeituhr (32).

10. Steuereinheit nach einem der Ansprüche 6 bis 9, umfassend eine Einrichtung zum Speichern der einzelnen Rufgeräte-IDs und der Zeiten der Eintragung in die Datei für aktive Rufe (44).

## Revendications

1. Méthode pour stocker et émettre ultérieurement des messages destinés à des récepteurs d'appel (12) ayant la capacité d'accuser réception en retour, d'une adresse identifiant le récepteur d'appel (12), mais qui refuse d'effectuer cet accusé de réception en retour lors d'une émission initiale de son adresse, ladite méthode étant caractérisée par :
l'établissement d'un fichier des récepteurs actifs (44) dans lequel se trouvent les adresses des récepteurs d'appel (12) à appeler ainsi que les messages destinés à ceux-ci;
la recherche des adresses des récepteurs d'appel à partir du fichier des récepteurs actifs (44);
l'envoi initial des adresses du récepteur d'appel recherché aux récepteurs d'appel (12);
l'établissement d'une période de temps prédéterminé avec une horloge (32) pendant laquelle les réponses d'accusé de réception en retour des récepteurs d'appel (12) appelés sont reçues;
la recherche des messages à partir du fichier des récepteurs actifs (44) pour ces récepteurs d'appel envoyant des réponses d'accusé de réception en retour dans une période de temps prédéterminée;
l'envoi des messages retrouvés destinés aux récepteurs d'appel (12);
l'établissement d'un fichier des récepteurs n'accusant pas réception (46);
le stockage, dans le fichier des récepteurs n'accusant pas réception (46) pour émettre par la suite à un moment ultérieur, les adresses et les messages correspondants à ceux-ci aux récepteurs d'appel appelés (12) qui refusent d'accuser réception en retour, les émissions d'adresses initiales pendant la période de temps prédéterminée;
la recherche périodique à partir du fichier des récepteurs n'accusant pas réception (46) des adresses du récepteur d'appel des récepteurs d'appel appelés (12) refusant initialement d'accuser réception en retour;
la ré-émission des adresses des récepteurs d'appel retrouvées; et
la recherche et l'émission des messages stockés pour chacun des récepteurs d'appel appelés (12) refusant initialement d'accuser réception en retour et cet accusé de réception en retour ultérieur concerne son adresse ré-émise.

2. Méthode de stockage et d'émission de messages à des récepteurs d'appel refusant initialement d'accuser réception en retour lors de la réception d'adresse selon la revendication 1, dans laquelle l'horloge (32) est une horloge temps réel, et ladite méthode comprend en outre les étapes de :
établissement d'une seconde période de temps prédéterminée avec l'horloge temps réel (32);
continuation de ré-émettre les adresses des récepteurs d'appel refusant initialement d'accuser réception en retour, jusqu'à ce que l'accusé de réception de cette émission soit reçu en retour de celui-ci, ou que la seconde période de temps prédéterminée expire.

3. Méthode pour stocker et émettre des messages au récepteur d'appel refusant initialement d'accuser réception en retour lors de la réception d'adresse selon la revendication 2, dans laquelle l'étape de stockage comprend l'étape supplémentaire de stockage d'un code d'identification ID du récepteur d'appel particulier, de son adresse et à la fois le moment de l'émission initiale et le moment de la dernière émission, s'il y en a une, dans le fichier des récepteurs n'accusant pas réception (46).

4. Méthode pour stocker et émettre des messages aux récepteurs d'appel refusant initialement d'accuser réception en retour lors de la réception d'adresse selon la revendication 3, dans laquelle les moments de l'émission initiale et de la dernière sont lus à partir de l'horloge temps réel (32).

5. Méthode pour stocker et émettre des messages à des récepteurs d'appel refusant initialement d'accuser réception lors de la réception d'adresse selon l'une quelconque des revendications 1 à 4, dans laquelle l'envoi des adresses et des messages aux récepteurs d'appel comprend l'étape supplémentaire de stockage des codes d'identification ID du récepteur d'appel particulier, et les moments d'introduction dans le fichier des récepteurs actifs (44).

6. Unité de commande à utiliser avec des récepteurs ayant la capacité d'accuser réception, l'unité de commande étant caractérisée par :
un dispositif de stockage des récepteurs actifs (44) dans laquelle on place les adresses des récepteurs d'appel (12) à appeler ainsi que des messages destinés à ceux-ci;
un dispositif pour retrouver les adresses des récepteurs d'appel à partir du dispositif de stockage des récepteurs actifs (44);
un dispositif d'émission pour envoyer initialement les adresses des récepteurs d'appel retrouvés, aux récepteurs d'appel (12);
une horloge (32) prévue pour établir une période de temps prédéterminée pendant laquelle on reçoit les réponses d'accusé de réception en retour, des récepteurs d'appel (12) appelés;
un dispositif pour retrouver des messages à partir du dispositif de stockage des récepteurs actifs (44) pour les récepteurs d'appel envoyant les réponses d'accusé de réception en retour dans la période de temps prédéterminée;
un dispositif d'émission pour envoyer le message retrouvé, destiné au récepteur d'appel (12);
un dispositif de stockage des récepteurs n'accusant pas réception (46);
un dispositif pour stocker, dans le dispositif de stockage des récepteurs n'accusant pas réception (46), en vue d'émettre ultérieurement à un autre moment, les adresses et les messages correspondants à ceux-ci aux récepteurs d'appel appelés (12) qui refuse d'accuser réception en retour lors de l'émission de l'adresse initiale dans la période de temps prédéterminée;
un dispositif pour retrouver périodiquement à partir du dispositif de stockage des récepteurs n'accusant pas réception (46) les adresses des récepteurs d'appel, des récepteurs d'appel appelés (12) refusant initialement d'accuser réception en retour;
un dispositif pour ré-émettre les adresses d'un récepteur d'appel retrouvé et pour retrouver et émettre les messages stockés pour chaque récepteur d'appel appelé (12) refusant initialement d'accuser réception en retour et qui accuse réception en retour ultérieurement son adresse ré-émise.

7. Unité de commande selon la revendication 6, dans laquelle l'horloge (32) est une horloge temps réel, et comprend en outre :
un dispositif pour établir une seconde période de temps prédéterminée avec l'horloge temps réel (32);
un dispositif pour continuer à ré-émettre les adresses des récepteurs d'appel refusant initialement d'accuser réception en retour jusqu'à ce que l'accusé de réception de cette émission soit reçu en retour par celui-ci ou que la seconde période de temps prédéterminée expire.

8. Unité de commande selon la revendication 7, dans laquelle le dispositif de stockage des récepteurs n'accusant pas réception (46) comprend un dispositif pour stocker un code d'identification ID d'un récepteur d'appel particulier, son adresse et à la fois le moment de l'émission initiale et le moment de la dernière émission s'il y a lieu.

9. Unité de commande selon la revendication 8, comprenant un dispositif pour lire le moment de l'émission initiale et celui de la dernière émission à partir de l'horloge temps réel (32).

10. Unité de commande selon l'une quelconque des revendications 6 à 9, comprenant un dispositif pour stocker les codes d'identification ID des récepteurs d'appel particuliers, et les moments de l'introduction dans le fichier des récepteurs actifs (44).
